# EUROPEAN PATENT APPLICATION

(11) **EP 4 456 401 A1**
(43) Date of publication of application: **30.10.2024**
(21) Application number: 22910518.4
(22) Date of filing: 05.10.2022
(51) Int. Cl.: H02M 3/00, H02J 1/00, H02J 3/32, H02J 3/46, H02J 13/00

(54) **POWER CONVERTER, POWER SYSTEM, AND METHOD FOR CONTROLLING POWER CONVERTER**

(30) Priority: 24.12.2021 JP 2021210117
(71) Applicant: FURUKAWA ELECTRIC CO., LTD., Tokyo 100-8322 (JP)
(72) Inventor: ABE, Asuka, Tokyo 100-8322 (JP)
(74) Representative: SSM Sandmair
(86) International application number: PCT/JP2022/037286
(87) International publication number: WO 2023/119792

(57) **Abstract**

An electric power network is stabilized even if a breakdown occurs in communication between an electric power converter and an external means. An electric power converter 11 includes: an electric power conversion unit 11a that is connected to a direct current bus, converts electric power input thereto, and outputs the electric power converted; a sensor 11b that obtains a measured value of an electric characteristic value of the electric power input or output; a communication unit 11d that receives a reference function having a characteristic with a defined target value for the electric characteristic value according to an input value; and a control unit 11c that controls the electric power conversion unit 11a based on a target value determined according to an input value by voltage control corresponding to the characteristic or by electric power control or electric current control; and in a case where the communication unit 11d is able to communicate with an external device, the control unit 11c controls the electric power conversion unit 11a based on the reference function from the input value and in a case where the communication unit 11d is unable to communicate with the external device, the control unit 11c controls the electric power conversion unit 11a based on a standard reference function from the input value, the input value being the measured value.

## Description

### Field

The present invention relates to an electric power converter, an electric power system, and a method of controlling the electric power converter.

### Background

Electric power networks using electric power locally produced for local consumption have attracted attention as alternative means of large scale electric power networks dependent on fossil energy and nuclear energy. Various devices, such as photovoltaic (PV) devices that are electric power generation devices to generate electric power by using renewable energy, stationary electric storage devices, and electric vehicles (EVs), are connected to electric power networks using electric power locally produced for local consumption. These various devices are direct current power sources, and studies on constructing direct current (DC) electric power networks (DC grids) are thus being conducted.

Systems for controlling electric power networks include, for example, an electric power conversion system disclosed in Patent Literature 1. In this electric power conversion system, a master and a slave are determined from among electric power conversion devices connected to a centralized control server and respective devices, the master indicates output electric power to the slave, and output in a network is thereby optimized. Furthermore, when an anomaly occurs in this electric power conversion system: information is exchanged between the electric power conversion devices and the master and the salve are reconfigured for return to a normal state; or information is exchanged between the electric power conversion devices for exchange and sharing of characteristic information including voltage values and electric current values and coordinated control is performed based on the information shared, for return to a normal state without determining the master and the slave.

### Citation List

### Patent Literature

Patent Literature 1: Japanese Patent Application Laid-open No. 2016-092898

### Summary

### Technical Problem

In the electric power conversion system disclosed in Patent Literature 1, if a failure occurs in the communication network, communication between the master and the slave will be unable to be performed and reconfiguration of the master and the slave and optimization of output will be unable to be performed. Furthermore, even with the configuration, in which the determination of the master and the slave is not performed in the electric power conversion system disclosed in Patent Literature 1, information needs to be exchanged between the electric power conversion devices, and if a failure occurs in the communication network, information will thus be unable to be exchanged between the electric power conversion devices and optimization of output will be unable to be performed.

The present invention has been made in view of the above and an object thereof is to stabilize an electric power network even if a breakdown occurs in communication between an electric power converter and an external means. Solution to Problem

To solve the above-described problem and achieve the object, an electric power converter according to one aspect of the present invention includes: a direct current electric power conversion unit connected to a direct current bus and configured to convert input electric power and output the converted electric power; a measurement unit configured to obtain a measured value of an electric characteristic value of the input electric power or the output electric power; a communication unit configured to perform communication with an external device and receive a reference function having a characteristic with a defined target value for an electric characteristic value according to an input value; a storage unit configured to store a standard reference function having a predetermined characteristic; and a control unit configured to control an electric power conversion characteristic of the electric power conversion unit based on a target value determined according to an input value, by voltage control corresponding to the characteristic, or by electric power control or electric current control, wherein the control unit is configured to set the measured value as the input value, in a case where the communication unit is able to communicate with the external device, the control unit is configured to control the electric power conversion characteristic of the electric power conversion unit based on the reference function from the input value, and in a case where the communication unit is unable to communicate with the external device, the control unit is configured to control the electric power conversion characteristic of the electric power conversion unit based on the standard reference function from the input value.

In the electric power converter according to one aspect of the present invention, the control unit is configured to generate a reference function resulting from change in a characteristic of the standard reference function according to the measured value and control the electric power conversion characteristic of the electric power conversion unit based on the generated reference function.

In the electric power converter according to one aspect of the present invention, the electric power conversion unit is connected to an electric power element that is capable of supplying electric power and being charged and discharged.

In the electric power converter according to one aspect of the present invention, the standard reference function has a characteristic that brings the bus into a stable state when the communication unit is in a state of being unable to communicate with the external device.

An electric power system according to one aspect of the present invention includes: the electric power converter; a direct current bus connected to the electric power converter; and an electric power element connected to the electric power converter and capable of supplying electric power, consuming electric power, or being charged or discharged.

A method according to one aspect of the present invention of controlling a direct current electric power converter connected to a direct current bus and configured to convert input electric power and output the converted electric power includes: a measurement step of obtaining a measured value of an electric characteristic value of the input electric power or the output electric power; a communication step of performing communication with an external device and receiving a reference function having a characteristic with a defined target value for an electric characteristic value according to an input value; and a control step of controlling an electric power conversion characteristic of the electric power converter based on a target value determined according to an input value, by voltage control corresponding to the characteristic, or by electric power control or electric current control, wherein the electric power converter includes a storage unit configured to store a standard reference function having a predetermined characteristic, and at the control step, the measured value is set as the input value and in a case where communication is possible with the external device at the communication step, the electric power conversion characteristic of the electric power converter is controlled based on the reference function from the input value, and in a case where communication with the external device is impossible at the communication step, the electric power conversion characteristic of the electric power converter is controlled based on the standard reference function from the input value.

### Advantageous Effects of Invention

The present invention enables stabilization of an electric power network even if a breakdown occurs in communication between an electric power converter and an external means.

### Brief Description of Drawings

FIG. 1 is a diagram illustrating a configuration of an electric power system according to a first embodiment.
FIG. 2 is a diagram illustrating a configuration of an electric power converter illustrated in FIG. 1.
FIG. 3 is a diagram illustrating a configuration of a control unit illustrated in FIG. 2.
FIG. 4 is a diagram illustrating an example of an electric power conversion characteristic.
FIG. 5 is a sequence diagram illustrating an example of operation of centralized control in the electric power system.
FIG. 6 is a flowchart illustrating a flow of a process performed by a control unit of the electric power converter.
FIG. 7 is a flowchart illustrating a flow of a process performed by the control unit of the electric power converter.
FIG. 8A is a diagram illustrating an example of an electric power conversion characteristic.
FIG. 8B is a diagram illustrating an example of the electric power conversion characteristic.
FIG. 8C is a diagram illustrating an example of the electric power conversion characteristic.
FIG. 9 is a diagram illustrating a configuration of an electric power system according to a second embodiment.
FIG. 10A is a diagram illustrating an example of an electric power conversion characteristic.
FIG. 10B is a diagram illustrating an example of the electric power conversion characteristic.
FIG. 11A is a diagram illustrating an example of an electric power conversion characteristic.
FIG. 11B is a diagram illustrating an example of the electric power conversion characteristic.
FIG. 11C is a diagram illustrating an example of the electric power conversion characteristic.
FIG. 11D is a diagram illustrating an example of the electric power conversion characteristic.
FIG. 12 is a diagram for description of an example of change of a reference function.

### Description of Embodiments

Embodiments of the present invention will be described hereinafter by reference to the drawings. The present invention is not to be limited by the embodiments described below. Furthermore, any portions that are the same will be assigned with the same reference sign, throughout the drawings.

### First Embodiment

### Configuration of Electric Power System

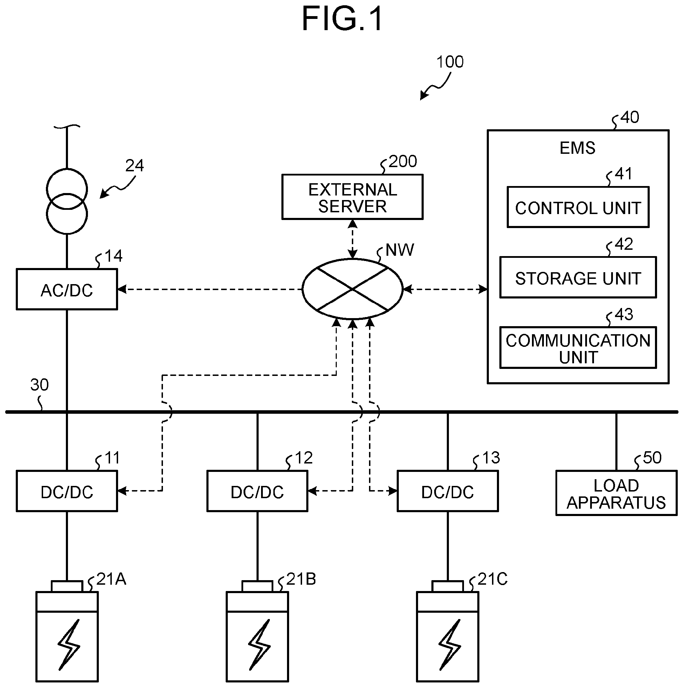

FIG. 1 is a diagram illustrating a configuration of an electric power system according to a first embodiment. An electric power system 100 includes plural electric power converters 11, 12, 13, and 14, plural electric power elements 21A, 21B, and 21C, a load apparatus 50, and a bus 30. The electric power system 100 also includes an energy management system (EMS) 40. The EMS 40 is an example of a centralized control apparatus.

The electric power converters 11, 12, and 13 are DC/DC converters that performs conversion of direct current voltage and the electric power converter 14 is an AC/DC converter that converts alternating current (AC) to direct current. The electric power converters 11, 12, 13, and 14 have a function of communicating information by wire or wirelessly. Configurations and functions of the electric power converters 11, 12, 13, and 14 will be described in detail later.

The bus 30 is a DC bus in the electric power system 100 and is connected to the electric power converters 11, 12, 13, and 14 and the load apparatus 50. An electric power network including a DC grid is formed in the electric power system 100.

The electric power element 21A is, for example, a stationary electric storage device capable of being charged with and of discharging electric power and is connected to the electric power converter 11. The stationary electric storage device is an example of an electric storage device permanently installed in a facility. The electric power converter 11 has a function of performing conversion of voltage of DC electric power supplied by the electric power element 21A, outputting the converted voltage to the bus 30, performing conversion of voltage of DC electric power supplied from the bus 30, and outputting the converted voltage to the electric power element 21A to charge the electric power element 21A.

The electric power element 21B and the electric power element 21C are also stationary electric storage devices. The electric power element 21B is connected to the electric power converter 12 and the electric power element 21C is connected to the electric power converter 13. The electric power converter 12 has a function of converting voltage of DC electric power supplied by the electric power element 21B, outputting the converted voltage to the bus 30, converting voltage of DC electric power supplied from the bus 30, and outputting the converted voltage to the electric power element 21B to charge the electric power element 21B. The electric power converter 13 has a function of converting voltage of DC electric power supplied by the electric power element 21C, outputting the converted voltage to the bus 30, converting voltage of DC electric power supplied from the bus 30, and outputting the converted voltage to the electric power element 21C to charge the electric power element 21C. The electric power elements 21A, 21B, and 21C are not limited to stationary electric storage devices and may be, for example, electric power conditioning devices, such as electric vehicles, large-capacity capacitors, and flywheels.

The load apparatus 50 is an apparatus that consumes electric power and is, for example, an apparatus that converts electric power into kinetic energy or thermal energy.

An electric power element 24 is, for example, a commercial alternating current electric power system and is connected to the electric power converter 14. The electric power converter 14 converts AC electric power supplied by the electric power element 24 into DC electric power and outputs the DC electric power to the bus 30.

The EMS 40 has a function of performing integrated management of the state of the electric power system 100. The EMS 40 includes a control unit 41, a storage unit 42, and a communication unit 43.

The control unit 41 performs various kinds of arithmetic processing for implementing the function of the EMS 40, and includes, for example, a processor, such as a central processing unit (CPU), an application specific integrated circuit (ASIC), a field-programmable gate array (FPGA), a digital signal processor (DSP), or a graphics processing unit (GPU). Functions of the control unit 41 are implemented as functional units by the control unit 41 reading and executing various programs from the storage unit 42.

The storage unit 42 includes, for example, a read only memory (ROM) where various programs and data used by the control unit 41 to perform the arithmetic processing are stored. Furthermore, the storage unit 42 includes, for example, a random access memory (RAM) used as working space for the arithmetic processing by the control unit 41 and for storage of results of the arithmetic processing by the control unit 41. The storage unit 42 may include an auxiliary storage, such as a hard disk drive (HDD) or a solid state drive (SSD).

The communication unit 43 includes a communication module that performs communication of information by wire or wirelessly. The communication unit 43 performs communication of information with the electric power converters 11, 12, 13, and 14 and an external server 200, via a network NW that is, for example, an Internet network or a mobile phone network.

The external server 200 is a server provided outside the electric power system 100. The external server 200 is, for example, an information processing apparatus configured to function as an EMS in another electric power system, or an information processing apparatus that includes a database and functions as a data server for the EMS 40. The external server 200 stores various kinds of information that possibly have an influence on use of the electric power system 100.

### Configuration of Electric Power Converter

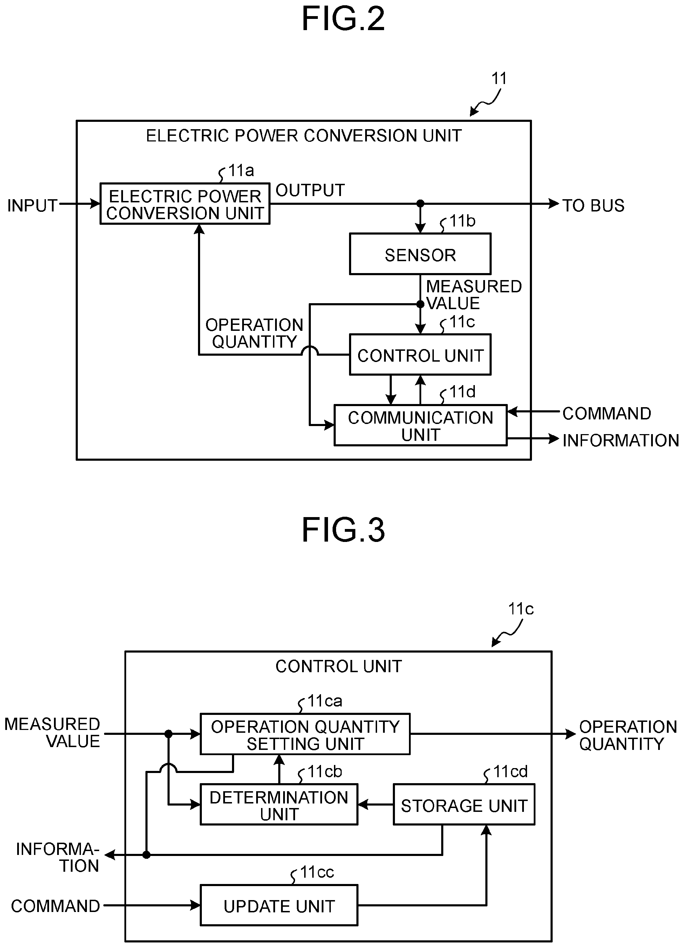

A specific configuration of the electric power converter 11 will be described next. FIG. 2 is a diagram illustrating a configuration of the electric power converter 11. The electric power converter 11 has an electric power conversion unit 11a, a sensor 11b, a control unit 11c, and a communication unit 11d.

The electric power conversion unit 11a converts voltage of DC electric power input from the electric power element 21A that is being discharged, to perform DC/DC conversion for output to the bus 30. The electric power conversion unit 11a may convert voltage of DC electric power input from the bus 30 and output the converted voltage to the electric power element 21A to charge the electric power element 21A. The electric power conversion unit 11a is formed of an electric circuit including, for example, a coil, a capacitor, a diode, and a switching element. The switching element is, for example, a field-effect capacitor or an insulated gate bipolar transistor. An electric power conversion characteristic of the electric power conversion unit 11a is able to be controlled by, for example, pulse width modulation (PWM) control.

The sensor 11b measures electric characteristic values of electric power on one side of the electric power conversion unit 11a, the one side being closer to the bus 30. Therefore, the sensor 11b measures an electric characteristic value of electric power input to the electric power converter 11 or output from the electric power converter 11. The sensor 11b is capable of measuring, for example, an electric current value, a voltage value, and an electric power value. The sensor 11b is an example of a measurement unit that obtains a measured value. The sensor 11b outputs measured electric characteristic values to the control unit 11c.

For implementation mainly of an electric power conversion function of the electric power converter 11, the control unit 11c includes: a processor that performs various kinds of arithmetic processing for controlling operation of the electric power conversion unit 11a; and a storage unit. The examples mentioned above as the components of the control unit 41 and the storage unit 42 may be used respectively for the processor and the storage unit. Functions of the control unit 11c are implemented as functional units, by the processor reading various programs from the storage unit and executing the various programs read. For example, the control unit 11c controls an electric power conversion characteristic of the electric power conversion unit 11a, according to a reference function based on local electric power (P) and local electric voltage (V). Specifically, the control unit 11c outputs a PWM signal to the electric power conversion unit 11a to implement PWM control of the electric power conversion unit 11a, the PWM signal including information on a quantity of operation (for example, a duty ratio) for the PWM control. The control unit 11c may directly output the quantity of operation to the electric power conversion unit 11a, or may output the quantity of operation to the electric power conversion unit 11a via another functional unit (for example, a loop control unit) not illustrated in the drawings.

The communication unit 11d includes a communication module that performs communication of information by wire or wirelessly, and a communication control unit that controls operation of the communication module. The communication unit 11d performs communication of information with the EMS 40 via the network NW. For example, the communication unit 11d receives information or a command from the EMS 40 and outputs the information or command to the control unit 11c. Furthermore, the communication unit 11d transmits, for example, information related to an electric power status input from the control unit 11c, to the EMS 40. In a case where the information related to the electric power status is a measured value from the sensor 11b, the communication unit 11d may transmit, for example, the measured value input from the sensor 11b, to the EMS 40.

FIG. 3 is a diagram illustrating a configuration of the control unit 11c, the configuration being related mainly to the electric power conversion function. The control unit 11c includes an operation quantity setting unit 11ca, a determination unit 11cb, and an update unit 11cc that are functional units implemented in software by execution of programs, as well as a storage unit 11cd.

The update unit 11cc causes the storage unit lied to store reference function information and control method information that are included in an update command input from the communication unit 11d to update reference function information and control method information that have been stored in the storage unit 11cd. The update command is a command transmitted from the EMS 40. The reference function information is various kinds of information for determining a droop function composing the reference function and the control method information is information for determining a feedback control method to be performed by the operation quantity setting unit 11ca, and the reference function information and the control method information will be described in detail later.

The determination unit 11cb makes a determination of the feedback control method to be performed by the operation quantity setting unit 11ca based on the control method information stored in the storage unit lied and outputs a result of this determination as determination information. This feedback control method may be feedback control (hereinafter, referred to as droop P control) of determining target electric power P_{ref} (an example of a target value) based on a measured voltage value Vₒ from the sensor 11b and the reference function information and setting a quantity of operation so that a difference between P_{ref} and a measured value Pₒ (an example of a control target value) of electric power from the sensor 11b becomes equal to or less than an acceptable range, or feedback control (hereinafter, referred to as droop V control) of determining a target voltage V_{ref} (an example of a target value) based on a measured value Pₒ of electric power from the sensor 11b and the reference function information and setting a quantity of operation so that a difference between V_{ref} and a measured voltage value Vₒ (an example of a control target value) from the sensor 11b becomes equal to or less than an acceptable range. The droop P control that is an example of electric power control and the droop V control that is an example of voltage control are examples of a control method to control output of the electric power conversion unit 11a. The above described control method information is information representing the droop P control or droop V control and the determination unit 11cb makes a determination of a feedback control method based on the control method information that has been stored in the storage unit lied and outputs, as determination information, a result of the determination to perform the droop P control or a result of the determination to perform the droop V control.

The operation quantity setting unit 11ca sets the feedback control method according to the determination information input from the determination unit 11cb, sets a quantity of operation based on a measured value input from the sensor 11b and the reference function information obtained from the storage unit 11cd, and outputs the set quantity of operation to the electric power conversion unit 11a. Feedback control performed by the operation quantity setting unit 11ca may be executed by using a publicly known technique, such as PID control executed by reading parameters, such as proportional gain, integral time, and derivative time that have been stored in the storage unit 11cd, for example.

The storage unit lied stores the reference function information and control method information included in the update command. Furthermore, the storage unit 11cd stores standard reference function information representing a standard function serving as a standard for a reference function to be used when a breakdown occurs in communication with the EMS 40. The storage unit lied or the operation quantity setting unit 11ca may output information, such as the information related to the electric power status or the reference function information, to the communication unit 11d.

The other electric power converters 12, 13, and 14 may each have a configuration similar to that of the electric power converter 11. However, the electric power conversion unit 11a of the electric power converter 14 is a so-called inverter that converts AC electric power input from the electric power element 24 to DC electric power and outputs the DC electric power to the bus 30.

### Characteristic of Reference Function

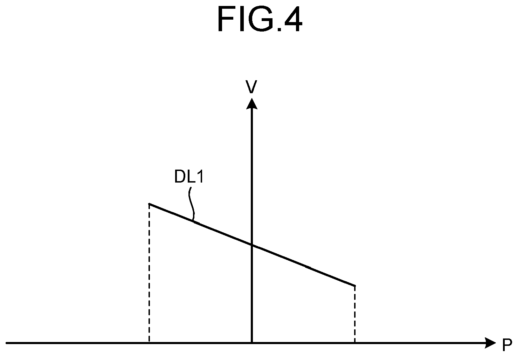

The reference function that serves as a basis for the control unit 11c to control the electric power conversion characteristic of the electric power conversion unit 11a will be described next. FIG. 4 is a diagram illustrating an example of the electric power conversion characteristic.

FIG. 4 is a diagram illustrating a V-P characteristic that is a relation between electric power (P) and voltage (V) on one side of the electric power conversion unit 11a that the electric power converter 11 has, the one side being closer to the bus 30, and illustrates the electric power conversion characteristic of the electric power conversion unit 11a that the electric power converter 11 has. Herein, P is a positive value in a state where the electric power conversion unit 11a is supplying electric power to the bus 30, that is, in a case where the electric power element 21A is in a discharged state and is a negative value in a state where electric power is being supplied from the bus 30, that is, in a case where the electric power element 21A is in a charged state.

A line DL1 illustrated in FIG. 4 is a straight line. A reference function represented by this line DL1 is composed of a droop function that has been defined according to an input value interval and has a predetermined drooping characteristic. This line DL1 is determined by the reference function information. The reference function may: correspond to a bent straight line or curved line; and be composed of plural droop functions that have been defined according to intervals of input value, have drooping characteristics different from one another, and have been connected to each other. The reference function information includes, for example, coordinate information on a boundary of the droop function at coordinates having P along a horizontal axis and V along a vertical axis, intercept information on the droop function, information on a slope (that is, a droop coefficient), and information on a form (a straight line or a curved line, for example). The control unit 11c in the electric power converter 11 performs control so that the electric power conversion characteristic of the electric power conversion unit 11a follows the characteristic of the reference function represented by the line DL1. That is, the control unit 11c in the electric power converter 11 controls the electric power conversion unit 11a so that an operating point defined by a value of V and a value of P is positioned on the line DL1. The reference function is not limited to a droop function having a drooping characteristic and may be any other function having a defined target value for an electric characteristic value according to an input value.

Reference function information corresponding to each of the electric power converters 12, 13, and 14 has also been stored in its storage unit lied and control is performed so that characteristics of reference functions determined by the reference function information stored are achieved.

### Control Method

A method of controlling the electric power converters 11, 12, 13, and 14 and a method of controlling the electric power system 100 will be described next. What may be executed in the electric power system 100 are: so-called local control where the electric power converters 11, 12, 13, and 14 individually perform autonomous decentralized control; and centralized control where the EMS 40 performs coordinated control of the electric power converters 11, 12, 13, and 14 according to the electric power status of the electric power system 100. For example, the local control is repeatedly executed on a comparatively short cycle, and the centralized control is executed at longer intervals than those of the cycle of the local control. The local control is also called primary control and the centralized control is also called secondary control. Programs cause a processor to execute these control methods, for example, at the electric power converters or the EMS 40.

### Centralized Control

Centralized control will be described first. In an example described hereinafter, the storage unit 11cd of each of the electric power converters 11, 12, 13, and 14 stores the reference function information, control method information, and standard reference function information in an updatable manner. The EMS 40 executes centralized control by updating, through commands, reference functions and feedback control methods used by the electric power converters 11, 12, 13, and 14 upon control. Updating the reference functions and the feedback control methods through the commands means that part or all of the reference function information stored in the electric power converters 11, 12, 13, and 14, and the information on the control methods to be executed by the electric power converters 11, 12, 13, and 14 are updated through the commands transmitted from the EMS 40 to the electric power converters 11, 12, 13, and 14, the commands including the reference function information related to the reference functions and the control method information related to the feedback control methods. The reference function information is, as described above, coordinate information on boundaries of droop functions, intercept information on the droop functions, information on slopes (that is, droop coefficients), and information on forms (straight lines or curved lines). The control method information is information representing the droop P control or droop V control. Reference function information used in an update has been stored in the storage unit 42 of the EMS 40 and the control unit 41 reads and uses the reference function information therefrom as appropriate.

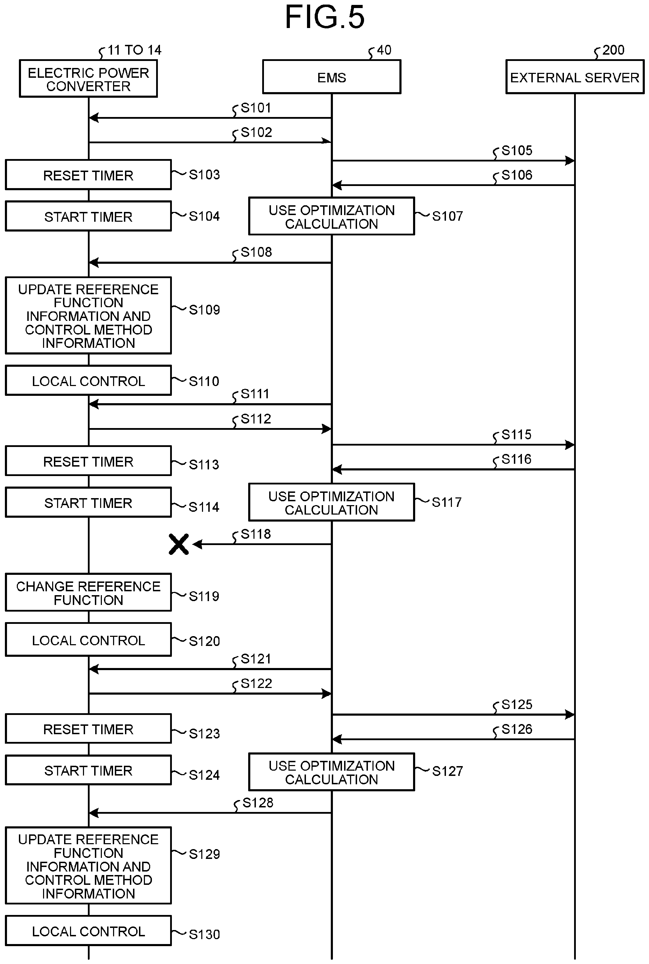

An example of operation of the centralized control in the electric power system 100 will be described next by reference to a sequence diagram in FIG. 5. Firstly, the EMS 40 requests each of the electric power converters 11, 12, 13, and 14 for local measurement information on a predetermined cycle or through a command (Step S101). The local measurement information is an example of the information related to the electric power status of the electric power system 100, and includes a measured value measured by a sensor in each of the electric power converters 11, 12, 13, and 14 and a measurement time.

Subsequently, each of the electric power converters 11, 12, 13, and 14 transmits the local measurement information to the EMS 40 (Step S102). The EMS 40 stores the local measurement information from each of the electric power converters 11, 12, 13, and 14 into the storage unit 42. Furthermore, the electric power converters 11, 12, 13, and 14 each reset a timer that makes a count to determine whether a breakdown in communication with the EMS 40 has lasted for a predetermined time period or more (Step S103) and start the reset timer (Step S104).

Subsequently, the EMS 40 requests the external server 200 for various kinds of information that possibly influence use of the electric power system 100 (Step S105), the various kinds of information being an example of the information related to the electric power status of the electric power system 100. In this example, the EMS 40 requests the external server 200 for electric power generation amount and demand prediction information. This electric power generation amount and demand prediction information includes prediction information on the amount of electric power generated and prediction information on a demand for electric power in the electric power system 100, and may include, for example, information on the season, current weather, and future weather forecast in or for the region where the electric power system 100 has been installed. Furthermore, in a case where the external server 200 functions as an EMS of another electric power system, if the use state of that other electric power system has a possibility of influencing the use of the electric power system 100, the electric power generation amount and demand prediction information may include prediction information on the amount of electric power generated and prediction information on the demand for electric power in the other electric power system.

Subsequently, the external server 200 transmits the electric power generation amount and demand prediction information to the EMS 40 (Step S106). The EMS 40 stores the electric power generation amount and demand prediction information transmitted from the external server 200, into the storage unit 42.

Subsequently, the control unit 41 of the EMS 40 reads each piece of information that has been transmitted, that is, for example, the information related to the electric power status of the electric power system 100, from the storage unit 42, and executes, based on the pieces of information read, use optimization calculation for the electric power system 100 (Step S107).

The use optimization calculation is executed for application to various conditions. For example, it is assumed that the electric power system 100 is controlled so that the bus 30 is at as an operating point of a predetermined voltage. It is assumed that in this state, the EMS 40 predicts, from the demand prediction information, that electric power consumption at the load apparatus 50 will increase, and determines, from the local measurement information obtained from the electric power converters 11, 12, and 13 connected to the electric power elements 21A, 21B, and 21C, that the electric power elements 21A, 21B, and 21C can afford to supply electric power. In this case, the EMS 40 determines that the reference functions for the electric power converters 11, 12, and 13 connected to the electric power elements 21A, 21B, and 21C are to be updated so that the electric power elements 21A, 21B, and 21C that are stationary electric storage devices will be discharged at the operating point. Furthermore, the EMS 40 determines that the reference function for the electric power converter 14 connected to the electric power element 24 is to be updated simultaneously with the above update so that electric power will be supplied from the electric power element 24 that is a commercial electric power system.

The use optimization calculation may be executed by setting conditions for not exceeding the contracted electric power for the electric power element 24 that is a commercial electric power system and for making the electricity price appropriate, like for peak cutting or utilization of nighttime electric power, for example. Furthermore, the storage unit 42 of the EMS 40 may store a trained model and the EMS 40 may execute the use optimization calculation using the trained model. The trained model that may be used, for example, is a trained model generated by deep learning using a neural network, with training data that are information related to electric power statuses of the electric power system 100 and results of switching and updating of the reference functions for the electric power converters 11, 12, 13, and 14 corresponding to that information.

Subsequently, the EMS 40 sets, based on a result of the use optimization calculation, reference function information and control method information that are suitable for the electric power converters 11, 12, 13, and 14, and outputs update commands that are an example of commands for updates of the reference functions (droop functions) and feedback control methods, the update commands including the set reference function information and control method information (Step S108).

In a case where there is no breakdown in communication between the EMS 40 and the electric power converters, the electric power converters 11, 12, 13, and 14 each obtain the update command for the update of the reference function and the feedback control method and update the reference function information and control method information (Step S109).

Subsequently, the electric power converters 11, 12, 13, and 14 each execute local control (Step S110). The electric power converters 11, 12, 13, and 14 perform the local control based on the reference function information and control method information that have been updated. Their local control is local control reflecting the electric power status of the electric power system 100 and coordinated control of the electric power converters 11, 12, 13, and 14 is thereby achieved. Details of the local control will be described later.

When a predetermined time period has elapsed from Step S101, the EMS 40 requests each of the electric power converters 11, 12, 13, and 14 for local measurement information (Step S111). Each of the electric power converters 11, 12, 13, and 14 transmits the local measurement information to the EMS 40 (Step S112). The EMS 40 stores their local measurement information into the storage unit 42. Furthermore, the electric power converters 11, 12, 13, and 14 reset the timer (Step S113) and start the reset timer (Step S114).

Subsequently, the EMS 40 requests the external server 200 for various kinds of information, as done at Step S105 (Step S115). As done at Step S106, the external server 200 transmits electric power generation amount and demand prediction information to the EMS 40 (Step S116). The EMS 40 stores the electric power generation amount and demand prediction information transmitted from the external server 200, into the storage unit 42. Subsequently, the control unit 41 of the EMS 40 executes use optimization calculation for the electric power system 100, as done at Step S107 (Step S117).

Subsequently, the EMS 40 sets, based on a result of the use optimization calculation, reference function information and control method information that are suitable for the electric power converters 11, 12, 13, and 14, and outputs update commands for the reference functions (droop functions) and feedback control methods, the update commands including the set reference function information and control method information (Step S118).

In a case where a breakdown has occurred, due to a communication failure, in communication between the EMS 40 and the electric power converters to be subjected to updates and the update commands do not reach the electric power converters 11, 12, 13, and 14, the electric power converters 11, 12, 13, and 14 change the reference functions to be used in the feedback control to reference functions generated based on the standard reference function information when a time period measured by the timer started at Step S114 exceeds a predetermined time period and perform local control using the changed reference functions (Step S120). Details of this change of the reference functions will be described later.

When a predetermined time period has elapsed from Step S111, the EMS40 request each of the electric power converters 11, 12, 13, and 14 for local measurement information (Step S121). If a recovery has been made from the communication failure and the communication between the EMS 40 and the electric power converters 11, 12, 13, and 14 has been restored, this request reaches the electric power converters 11, 12, 13, and 14 and each of the electric power converters 11, 12, 13, and 14 transmits the local measurement information to the EMS 40 (Step S122). The EMS 40 stores their local measurement information into the storage unit 42. Furthermore, the electric power converters 11, 12, 13, and 14 reset the timer (Step S123) and start the reset timer (Step S124).

Subsequently, the EMS 40 requests the external server 200 for various kinds of information, as done at Step S105 (Step S125). As done at Step S106, the external server 200 transmits electric power generation amount and demand prediction information to the EMS 40 (Step S126). The EMS 40 stores the electric power generation amount and demand prediction information transmitted from the external server 200, into the storage unit 42. Subsequently, the control unit 41 of the EMS 40 executes use optimization calculation for the electric power system 100, as done at Step S107 (Step S127).

Subsequently, the EMS 40 sets, based on a result of the use optimization calculation, reference function information and control method information that are suitable for the electric power converters 11, 12, 13, and 14, and outputs update commands for the reference functions (droop functions) and feedback control methods, the update command including the set reference function information and control method information (Step S128).

If the communication between the EMS 40 and the electric power converters 11, 12, 13, and 14 has already been restored, the update commands will reach the electric power converters 11, 12, 13, and 14. The electric power converters 11, 12, 13, and 14 obtain the update commands for the reference functions and feedback control methods and update the reference function information and control method information (Step S129) and each execute local control based on the updated reference function information and control method information (Step S130).

### Local Control

A control method for the local control at the electric power converters 11, 12, 13, and 14 will be described next with respect to the electric power converter 11 serving as an example. Control methods similar to that described hereinafter may be executed as appropriate at the other electric power converters 12, 13, and 14.

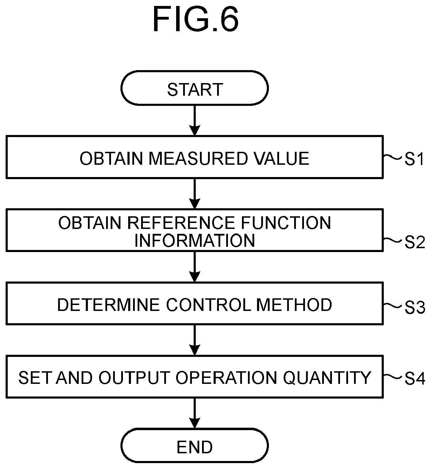

In the method of controlling the electric power converter 11, the control unit 11c executes a control step of controlling an electric power conversion characteristic of the electric power converter 11, that is, the electric power conversion characteristic of the electric power conversion unit 11a, based on the reference function. An example of this control step will be described specifically by reference to FIG. 6. FIG. 6 is a flowchart illustrating a flow of a process executed by the control unit 11c.

Firstly, the operation quantity setting unit 11ca in the control unit 11c obtains a measured value from the sensor 11b (Step S1). Subsequently, the operation quantity setting unit 11ca in the control unit 11c obtains the reference function information from the storage unit lied (Step S2). Subsequently, the determination unit 11cb in the control unit 11c determines a feedback control method based on the control method information stored in the storage unit lied (Step S3). Subsequently, the operation quantity setting unit 11ca in the control unit 11c obtains determination information output from the determination unit 11cb, sets, based on the measured value and the reference function information, a quantity of operation for executing feedback control by a control method based on the determination information obtained, and outputs the set quantity of operation to the electric power conversion unit 11a (Step S4). Control of the electric power conversion unit 11a is thereby executed.

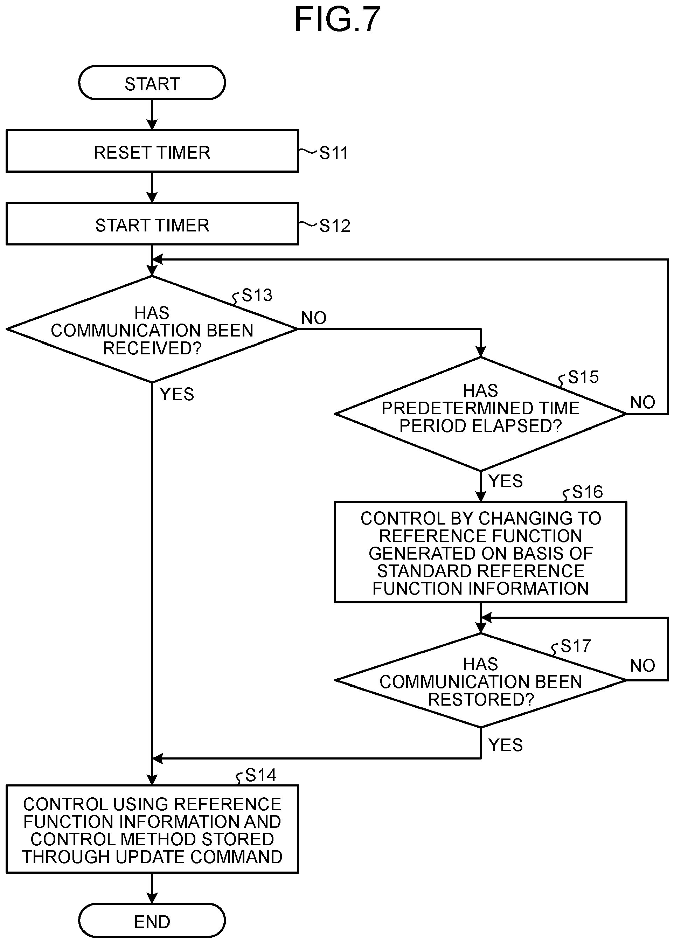

FIG. 7 is a flowchart illustrating flows of an update process and a change process for reference functions and feedback control methods, the update process and the change process being performed by the electric power converters 11, 12, and 13. The control unit 11c resets the above described timer that makes a count to determine whether a breakdown in communication with the EMS 40 has lasted for the predetermined time period or more at, for example, the time described above (Step S11) and starts the reset timer (Step S12). Step S11 corresponds to Step S103, Step S113, and Step S123 in FIG. 5, and Step S12 corresponds to Step S104, Step S114, and Step S124 in FIG. 5.

Subsequently, the control unit 11c determines whether a communication from the EMS 40 has been received (Step S13). If, for example, the communication unit 11d has received a request for local measurement information or an update command transmitted from the EMS 40, the control unit 11c determines that a communication from the EMS 40 has been received, that is, communication with the EMS 40 is possible (Yes at Step S13). In a case where a communication from the EMS 40 has been received, the control unit 11c performs local control based on reference function information and a control method stored by means of an update command (Step S14).

In a case where a communication from the EMS 40 has not been received (No at Step S13), the control unit 11c determines whether or not a time period being measured by the timer has exceeded the predetermined time period (Step S15). In a case where the time period being measured by the timer has not exceeded the predetermined time period (No at Step S15), the control unit 11c returns the flow of the process to Step S13. In a case where the time period being measured by the timer has exceeded the predetermined time period (Yes at Step S15), the control unit 11c determines that a breakdown has occurred in communication with the EMS 40, generates a reference function based on the standard reference function information stored beforehand, and performs local control by changing the reference function to be used in control to the generated reference function (Step S16).

As to the reference function generated based on the standard reference function information, for example, the electric power converter 11 performs a measurement of at least one of indices, such as integrated electric power and integrated electric current of the electric power element 21A connected to the electric power converter, input and output capacitance of the electric power element 21A, a terminal voltage of the electric power element 21A, and SOC and SOH of the electric power element 21A that is an electric storage device, and generates the reference function based on a result of the measurement. Furthermore, in a case where the electric power element 21A includes a flywheel, a fuel cell, or an electric double layer capacitor, for example, capacitance of such an electric storage device may also be included in the index/indices. The electric power converter 11 may store, for example, contracted electric power or a contracted amount of electric power for the electric power element 24, which is a commercial electric power system, beforehand and the contracted electric power or contracted amount of electric power may also be included in the index/indices. The reference function that has been changed is a reference function that has been set to stabilize the bus 30 and thus the electric power system 100 upon a breakdown in the communication with the EMS 40.

After Step S16, the control unit 11c determines whether the communication with the EMS 40 has been restored (Step S17). Specifically, the control unit 11c determines whether the communication has been restored through, for example, a request for local measurement information, the request being transmitted from the EMS 40. In a case where the communication unit 11d has not received a request for local measurement information (No at Step S17), the control unit 11c repeats Step S17. If the communication unit 11d has received a request for local measurement information, the control unit 11c determines that the communication with the EMS 40 has been restored (Yes at Step S13). In a case where the communication with the EMS 40 has been restored, the control unit 11c performs local control according to reference function information and a control method stored by means of an update command (Step S14).

### Change of Reference Function

Details of a process of changing the reference function to a reference function generated based on standard function information will be described next. In a case supposed according to the following description, for example, the electric power converter 14 performs output at a rated output of 50 kW and the electric power elements 21A, 21B, and 21C have a rated output of 50 kW. Furthermore, it is supposed that the electric power converters 11, 12, and 13 perform control using the same reference function through an update command from the EMS 40, the electric power element 21A has a state of charge (SOC) of 80%, the electric power element 21B has an SOC of 60%, and the electric power element 21C has an SOC of 40%.

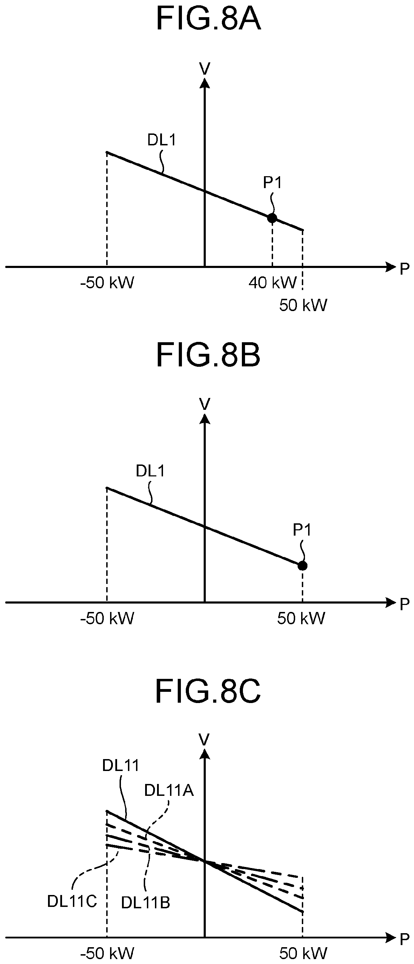

In a state where there is no breakdown in communication between the EMS 40 and the electric power converters 11, 12, and 13, if for example, electric power consumed by the load apparatus 50 is 170 kW, the electric power elements 21A, 21B, and 21C each output 40 kW. The control units 11c in the electric power converters 11, 12, and 13 each perform control so that the electric power conversion characteristic of the electric power conversion unit 11a follows the characteristic of the reference function represented by the line DL1, for example. That is, the control units 11c each control the electric power conversion unit 11a so that as illustrated in FIG. 8A, an operating point P1 defined by a value of V and a value of P (40 kW) on one side of the electric power conversion unit 11a is positioned on the line DL1, the one side being closer to the bus 30.

In a configuration supposed herein for comparison with the present invention, for example, the reference function is not changed when a breakdown occurs in communication between the EMS 40 and the electric power converters 11, 12, and 13. In this case, an update command from the EMS 40 will not reach the electric power converters 11, 12, and 13 and centralized control will not be able to be performed according to a state of the bus 30, and thus if the load apparatus 50 is kept in operation, the SOC of the electric power element 21C, which had the lowest SOC, will become 0% first. When the SOC of the electric power element 21C has become 0% and the electric power elements 21A and 21B are capable of performing output, the control units 11c in the electric power converters 11 and 12 each control the electric power conversion unit 11a, as illustrated in FIG. 8B, so that the operating point P1 is positioned on the line DL1 and the electric power elements 21A and 21B perform output at a rated output of 50 kW. The total of electric power supplied from the electric power elements 21A, 21B, and 21C will be 100 kW and will be less than 170 kW even if the output of the electric power converter 14, 50 kW, is added, and the electric power consumed by the load apparatus 50 needs to be limited to 150 kW.

By contrast, according to the present invention, in a case where a breakdown has occurred in communication between the EMS 40 and the electric power converters 11, 12, and 13, the electric power converters 11, 12, and 13 each change the reference function to be used in feedback control to a reference function generated based on a standard function. A line DL11 illustrated by a solid line in FIG. 8C is an example of the standard function represented by the standard reference function information that has been stored in the storage unit lied beforehand. This standard function is a function that has been set beforehand, for example, to have a characteristic of bringing the bus 30 into a stable state through decentralized control by each of the electric power converters 11, 12, and 13 upon a breakdown in communication between the EMS and the electric power converters 11, 12, and 13 and thus bringing the electric power system 100 into a stable state. The standard function is generated by the EMS 40 based on an index used in generation of the reference function from the standard function and transmitted to and stored in the electric power converters 11, 12, and 13.

In a case where a breakdown has occurred in communication with the EMS 40, the control unit 11c generates a reference function having a slope that has been changed from that of the standard function represented by the line DL11 and changes the reference function to be used in control, to the generated reference function. Specifically, the control unit 11c changes the slope of the standard function based on the SOC of the electric power element that has been connected to the electric power conversion unit 11a, for example.

FIG. 8C is a diagram illustrating an example of the reference function generated from the standard function when the operating point is lower than the intercept of the line DL11. In a case where the operating point of the electric power element 21C is lower than the intercept of the line DL11 and the SOC of the electric power element 21C is 40%, the control unit 11c in the electric power converter 13 generates a reference function represented by a line DL11A illustrated by a broken line having a slope with an absolute value smaller than that of the standard function, and performs control by changing the reference function to be used in feedback control to the generated reference function. In a case where the operating point of the electric power element 21B is lower than the intercept of the line DL11 and the SOC of the electric power element 21B is 60%, the control unit 11c in the electric power converter 12 generates a reference function represented by a line DL11B illustrated by a dash-dotted line having a slope with an absolute value smaller than that of the line DL11A, and performs control by changing the reference function to be used in feedback control to the generated reference function. In a case where the operating point of the electric power element 21A is lower than the intercept of the line DL11 and the SOC of the electric power element 21A is 80%, the control unit 11c in the electric power converter 11 generates a reference function represented by a line DL11C illustrated by a dashed and double-dotted line having a slope with an absolute value smaller than that of the line DL11B, and performs control by changing the reference function to be used in feedback control to the generated reference function. In a case where the operating point P1 is higher than the intercept of the line DL1, the control unit 11c generates a reference function having a slope with an absolute value larger than that of the standard function. Specifically, in a case where the operating point P1 is higher than the intercept of the line DL1, the control unit 11c makes the absolute value of a slope of a reference function to be generated larger than that of the line DL11 and increases the absolute value of the slope as the SOC of the electric power element increases.

Until the communication is restored and an update command is received from the EMS 40, the control unit 11c in each of the electric power converters 11, 12, and 13 may monitor the SOC or the remaining capacitance of the electric power element that has been connected and dynamically change the slope of the reference function based on the SOC or remaining capacitance. For example, in a case where the SOC of the electric power element 21C has become less than 40%, the control unit 11c in the electric power converter 13 generates a reference function having a slope with an absolute value larger than that of the line DL11A and performs control by changing the reference function to the generated reference function. Furthermore, in a case where a reference function is generated from the standard function, the control unit 11c may generate the reference function by changing, not only the slope of the standard function, but also the intercept of the standard function, for example. Furthermore, until the communication is restored and an update command is received from the EMS 40, the control unit 11c in each of the electric power converters 11, 12, and 13 may dynamically change the slope of the reference function based on the above described index/indices.

As compared with the case where the reference function is not changed even if a breakdown occurs in communication, the control unit 11c changing the reference function upon a breakdown in the communication with the EMS 40 enables a state to be maintained for a long period of time, the state being a state where the electric power elements 21A, 21B, and 21C are able to perform output, and enables a time period to be increased, the time period being a time period, in which the load apparatus 50 is used without reduction in the electric power consumed by the load apparatus 50. Furthermore, in a case where the communication with the EMS 40 has been restored, the electric power converters 11, 12, and 13 perform control by updating the reference function with a reference function optimized for use based on an update command from the EMS 40, and use of the electric power system 100 is thus enabled in a state optimum for a DC grid.

The next description is on changing a reference function in a case where there is no breakdown in communication between the electric power converters 11 and 12 and the EMS 40 and a breakdown occurs in communication between the electric power converter 13 and the EMS 40 when the electric power elements 21A, 21B, and 21C are being discharged. In a case supposed herein, until a breakdown occurs in the communication between the electric power converter 13 and the EMS 40, the electric power converters 11, 12, and 13 each perform control using the same reference function through an update command from the EMS 40, the SOC of the electric power element 21A is 80%, the SOC of the electric power element 21B is 80%, and the SOC of the electric power element 21C is 40%.

In a state where there is no breakdown in communication between the EMS 40 and the electric power converters 11, 12, and 13, if for example, electric power consumed by the load apparatus 50 is 170 kW, the electric power elements 21A, 21B, and 21C each output 40 kW. The control units 11c in the electric power converters 11, 12, and 13 each perform control so that the electric power conversion characteristic of the electric power conversion unit 11a follows the characteristic of the reference function represented by the line DL1, for example. That is, the control units 11c each control the electric power conversion unit 11a so that as illustrated in FIG. 8A, the operating point P1 defined by a value of V and a value of P (40 kW) on one side of the electric power conversion unit 11a is positioned on the line DL1, the one side being closer to the bus 30.

In a configuration supposed herein for comparison with the present invention, for example, the reference function is not changed when a breakdown occurs in communication between the EMS 40 and the electric power converter 13. In this case, an update command will not reach the electric power converter 13, the electric power converter 13 will not be able to perform centralized control according to a state of the bus 30, and the SOC of the electric power element 21C will thus become 0% if the load apparatus 50 is kept in operation. When the SOC of the electric power element 21C has become 0% and the electric power elements 21A and 21B are able of perform output, the control units 11c in the electric power converters 11 and 12 each control the electric power conversion unit 11a as illustrated in FIG. 8B, so that the operating point P1 is positioned on the line DL1 and the electric power elements 21A and 21B perform output at a rated output of 50 kW. The total of electric power supplied from the electric power elements 21A, 21B, and 21C will be 100 kW and will be less than 170 kW even if the output of the electric power converter 14, 50 kW, is added, and the electric power consumed by the load apparatus 50 will need to be limited to 150 kW.

By contrast, according to the present invention, in a case where a breakdown has occurred in communication between the EMS 40 and the electric power converter 13, the electric power converter 13 changes the reference function to be used in feedback control to a reference function generated based on the standard function. Specifically, in a case where the SOC of the electric power element 21C is 40%, the control unit 11c in the electric power converter 13 generates a reference function represented by the line DL11A illustrated in FIG. 8C by the broken line having the slope with the absolute value smaller than that of the standard function, and performs control by changing the reference function to be used in feedback control to the generated reference function. Until the communication is restored and an update command is received from the EMS 40, the control unit 11c in the electric power converter 13 may monitor the SOC of the electric power element 21C that has been connected and dynamically change the slope of the reference function based on the SOC.

Furthermore, the control units 11c in the electric power converters 11 and 12 where there is no breakdown in communication with the EMS 40 each control the electric power conversion unit 11a so that as illustrated in FIG. 8A, the operating point P1 defined by a value of V and a value of P (40 kW) on one side of the electric power conversion unit 11a is positioned on the line DL1, the one side being closer to the bus 30.

As compared with the case where the reference function is not changed even if a breakdown occurs in communication, the control unit 11c in the electric power converter 13 changing the reference function upon a breakdown in the communication with the EMS 40 enables a state to be maintained for a long period of time, the state being a state where the electric power element 21C is able to perform output, and enables a time period to be increased, the time period being a time period, in which the load apparatus 50 is used without reduction in the electric power consumed by the load apparatus 50. Furthermore, in a case where the communication with the EMS 40 has been restored, the electric power converter 13 performs control by making an update with a reference function optimized for use based on an update command from the EMS 40, and use of the electric power system 100 is thus able to be resumed in a state optimum for a DC grid.

The control units 11c in the electric power converters 11, 12, and 13 may each cause a change in the target value to be equal to or less than a predetermined threshold upon changing the reference function in response to a breakdown in communication or upon updating the reference function in response to restoration of communication.

### Second Embodiment

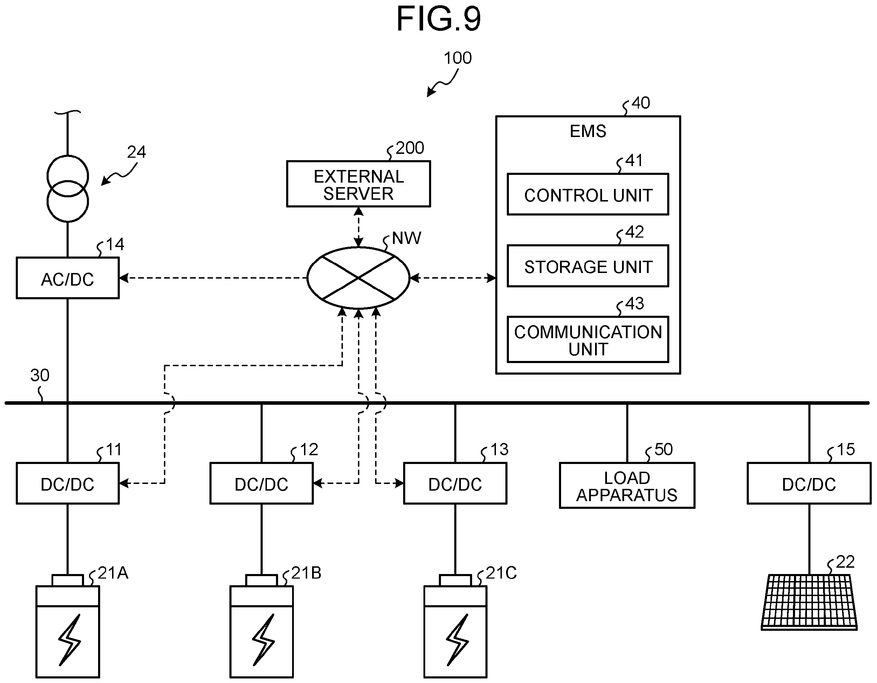

A second embodiment of the present invention will be described next. FIG. 9 is a diagram illustrating a configuration of an electric power system according to the second embodiment. The electric power system according to the second embodiment is different from the first embodiment in that the electric power system according to the second embodiment includes an electric power element 22 and an electric power converter 15. The other components are the same as those of the first embodiment, the same reference signs will be assigned to the components that are the same as those of the first embodiment and description thereof will be omitted, and differences from the first embodiment will be described hereinafter.

The electric power element 22 is, for example, a photovoltaic device capable of generating and supplying electric power, and is connected to the electric power converter 15. The photovoltaic device is an example of an electric power generation device that generates electric power by using renewable energy.

The electric power converter 15 is a DC/DC converter and has a function of converting voltage of DV electric power supplied by the electric power element 22 and outputting the converted voltage to the bus 30 and a function of communicating information by wire or wirelessly. The electric power converter 15 also has an electric power conversion unit 11a, a sensor 11b, a control unit 11c, and a communication unit 11d; and the control unit 11c in the electric power converter 15 also includes an operation quantity setting unit 11ca, a determination unit 11cb, and an update unit 11cc that are functional units implemented in software by execution of programs, as well as a storage unit 11cd. In response to input of electric power according to an amount of electric power generated by the electric power element 22 from the electric power element 22, the electric power converter 15 may execute control of the maximum power point tracking (MPPT) method to cause operation such that electric power output to the bus 30 through that amount of electric power generated is maximized.

### Change of Reference Function

Details of a process, in which a breakdown occurs in communication between the EMS 40 and the electric power converters 11, 12, and 13 when the electric power elements 21A, 21B, and 21C are being charged and the electric power converters 11, 12, and 13 change the reference function, will be described next. In a case supposed according to the following description, for example, the electric power converter 14 performs output at a rated output of 50 kW without any reverse power flow, the electric power elements 21A, 21B, and 21C have a rated output of 50 kW, and the electric power element 22 has a rated output of 140 kW. Furthermore, it is supposed that the electric power converters 11, 12, and 13 perform control using the same reference function through an update command from the EMS 40, the electric power element 21A has an SOC of 80%, the electric power element 21B has an SOC of 60%, and the electric power element 21C has an SOC of 40%.

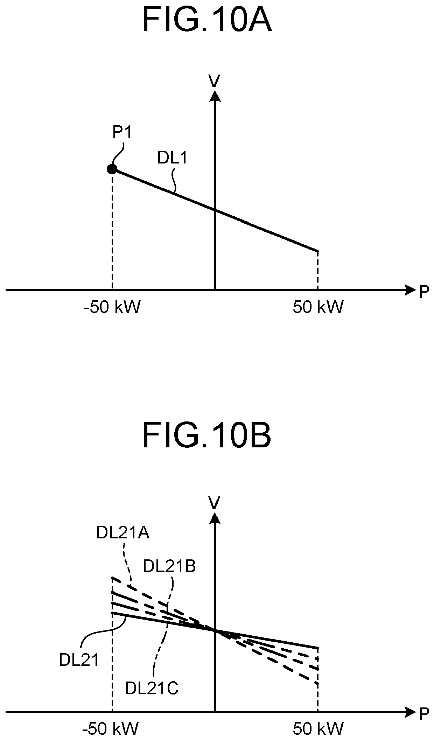

In a state where there is no breakdown in communication between the EMS 40 and the electric power converters 11, 12, and 13, the control units 11c in the electric power converters 11, 12, and 13 each perform control so that the electric power conversion characteristic of the electric power conversion unit 11a follows the characteristic of the reference function represented by the line DL1, for example. That is, the control units 11c each control the electric power conversion unit 11a so that as illustrated in FIG. 10A, an operating point P1 defined by a value of V and a value of P (-50 kW) on one side of the electric power conversion unit 11a is positioned on a line DL1, the one side being closer to the bus 30.

In a configuration supposed herein for comparison with the present invention, for example, the reference function is not changed when a breakdown occurs in communication between the EMS 40 and the electric power converters 11, 12, and 13. In this case, an update command from the EMS 40 will not reach the electric power converters 11, 12, and 13 and centralized control will not be able to be performed according to a state of the bus 30, and thus if the electric power converters 11, 12, and 13 continue to be charged, the SOC of the electric power element 21A that had the highest SOC will become 100% first. When the SOC of the electric power element 21A has become 100% and the electric power converter 11 has stopped charging the electric power element 21A, only the electric power elements 21B and 21C are in a chargeable state. The total of electric power needed to charge the electric power elements 21A, 21B, and 21C will then be 100 kW and the electric power converter 15 will need to limit output of the electric power element 22 to 100 kW, the electric power element 22 being capable of generating electric power of 140 kW.

By contrast, according to the present invention, in a case where a breakdown has occurred in communication between the EMS 40 and the electric power converters 11, 12, and 13, the electric power converters 11, 12, and 13 change the reference function to be used in feedback control to a reference function generated based on the standard function. A line DL21 illustrated by a solid line in FIG. 10B is an example of the standard function represented by the standard reference function information that has been stored in the storage unit lied beforehand.

In a case where a breakdown has occurred in communication with the EMS 40, the control unit 11c generates a reference function having a slope that has been changed from that of the standard function represented by the line DL21 and changes the reference function to be used in control, to the generated reference function. Specifically, the control unit 11c changes the slope of the standard function based on the SOC of the electric power element that has been connected to the electric power converter, for example.

In a case where the operating point P1 is higher than the intercept of the line DL1 and the SOC of the electric power element 21C is 40%, the control unit 11c in the electric power converter 13 generates a reference function represented by a line DL21C illustrated by a dashed and double-dotted line having a slope with an absolute value larger than that of the standard function and performs control by changing the reference function to be used in feedback control to the generated reference function. In a case where the operating point P1 is higher than the intercept of the line DL1 and the SOC of the electric power element 21B is 60%, the control unit 11c in the electric power converter 12 generates a reference function represented by a line DL21B illustrated by a dash-dotted line having a slope with an absolute value smaller than that of the line DL21A, and performs control by changing the reference function to be used in feedback control to the generated reference function. In a case where the operating point P1 is higher than the intercept of the line DL1 and the SOC of the electric power element 21A is 80%, the control unit 11c in the electric power converter 11 generates a reference function represented by a line DL21A illustrated by a dashed and double-dotted line having a slope with an absolute value larger than that of the line DL21B, and performs control by changing the reference function to be used in feedback control to the generated reference function.

Until the communication is restored and an update command is received from the EMS 40, the control unit 11c in each of the electric power converters 11, 12, and 13 monitors the SOC of the electric power element that has been connected and dynamically changes the slope of the reference function based on the SOC. For example, in a case where the SOC of the electric power element 21C has become larger than 80%, the control unit 11c in the electric power converter 11 generates a reference function having a slope with an absolute value smaller than that of the line DL21A and performs control by changing the reference function to the generated reference function.

As compared with the case where the reference function is not changed even if a breakdown occurs in communication, the control unit 11c dynamically changing the reference function upon a breakdown in communication with the EMS 40 enables a state to be maintained for a long period of time, the state being a state where the electric power elements 21A, 21B, and 21C are discharged, and enables a time period of use to be increased without reduction in output of the electric power element 22. Furthermore, in a case where the communication with the EMS 40 has been restored, the electric power converters 11, 12, and 13 perform control by making an update with a reference function optimized for use based on an update command from the EMS 40, and use of the electric power system 100 is thus enabled in a state optimum for a DC grid.

The next description is on changing a reference function in a case where there is no breakdown in communication between the electric power converters 12 and 13 and the EMS 40 and a breakdown occurs in communication between the electric power converter 11 and the EMS 40 when the electric power elements 21A, 21B, and 21C are being charged. In a case supposed herein, until a breakdown occurs in the communication between the electric power converter 13 and the EMS 40, the electric power converters 11, 12, and 13 perform control using the same reference function through an update command from the EMS 40, the SOC of the electric power element 21A is 80%, the SOC of the electric power element 21B is 80%, and the SOC of the electric power element 21C is 40%.

In a state where there is no breakdown in communication between the EMS 40 and the electric power converters 11, 12, and 13, the control units 11c in the electric power converters 11, 12, and 13 each perform control so that the electric power conversion characteristic of the electric power conversion unit 11a follows the characteristic of the reference function represented by the line DL1, for example. That is, the control units 11c each control the electric power conversion unit 11a so that as illustrated in FIG. 10A, the operating point P1 defined by a value of V and a value of P (-50 kW) on one side of the electric power conversion unit 11a is positioned on the line DL1, the one side being closer to the bus 30.

In a configuration supposed herein for comparison with the present invention, for example, the reference function is not changed when a breakdown occurs in communication between the EMS 40 and the electric power converter 13. In this case, when the SOC of the electric power element 21A has become 100% and the electric power converter 11 has stopped charging the electric power element 21A, only the electric power elements 21B and 21C are in a chargeable state. The total of electric power needed to charge the electric power elements 21A, 21B, and 21C will then be 100 kW and the electric power converter 15 will need to limit output of the electric power element 22 to 100 kW, the electric power element 22 being capable of generating electric power of 140 kW.

By contrast, according to the present invention, in a case where a breakdown has occurred in communication between the EMS 40 and the electric power converter 11, the electric power converter 11 changes the reference function to be used in feedback control to a reference function generated based on the standard function. Specifically, in a case where the SOC of the electric power element 21A is 80%, the control unit 11c in the electric power converter 11 generates a reference function represented by the line DL21A having a slope with an absolute value larger than that of the standard function and performs control by changing the reference function to the generated reference function. Until the communication is restored and an update command is received from the EMS 40, the control unit 11c in the electric power converter 11 may monitor the SOC of the electric power element 21A that has been connected and dynamically change the slope of the reference function based on the SOC.

Furthermore, the control units 11c in the electric power converters 12 and 13 where there is no breakdown in communication with the EMS 40 each control the electric power conversion unit 11a so that as illustrated in FIG. 10A, the operating point P1 defined by a value of V and a value of P (-50 kW) on one side of the electric power conversion unit 11a is positioned on the line DL1, for example, the one side being closer to the bus 30. In a case where an update command transmitted from the EMS 40 has been obtained, the control units 11c in the electric power converters 12 and 13 each update the reference function and the feedback control method and controls the electric power conversion unit 11a using the updated reference function and feedback control method.

As compared with the case where the reference function is not changed even if a breakdown occurs in communication, the control unit 11c in the electric power converter 11 dynamically changing the reference function upon a breakdown in communication with the EMS 40 enables a state to be maintained for a long period of time, the state being a state where the electric power element 21A is charged, and enables a time period of use to be increased without reduction in output of the electric power element 22. Furthermore, when the communication with the EMS 40 has been restored, the electric power converter 11 performs control by making an update with a reference function optimized for use based on an update command from the EMS 40, and use of the electric power system 100 is thus enabled in a state optimum for a DC grid.

### Modified Examples

Embodiments of the present invention have been described above but without being limited to the embodiments described above, the present invention can be implemented in various other modes. For example, the above described embodiments may be modified as follows to implement the present invention. Any of the above described embodiments and the following modified examples may be combined with one another. The present invention also includes a configuration including any combination of the above described components of the embodiments and modified examples as appropriate. Further effects and modified examples can also be easily derived by those skilled in the art. Therefore, wider aspects of the present invention are not limited to the above described embodiments and the modified examples and various modifications can be made.

In the above described embodiments, the control unit 11c changes the reference function in a case where an update command is not obtained before elapse of a predetermined time period after transmitting local measurement information to the EMS 40, but the time to change the reference function is not limited to the time according to the embodiments. For example, in a case where the control unit 11c has not received a request for local measurement information from the EMS 40 even if a predetermined time period has elapsed, the control unit 11c may change the reference function. Furthermore, the control unit 11c may attempt communication with the EMS 40, the communication requiring a response, and in a case where there has been no response from the EMS 40 even if a predetermined time period has elapsed, the control unit 11c may change the reference function.

The control unit 11c according to the present invention may perform control based on reference function information and control method information by secondary control after elapse of a predetermined time period from restoration of communication with the EMS 40.

The EMS 40 according to the present invention may transmit an update command only to an electric power converter where the reference function and the feedback control method are to be updated. In this case, the EMS 40 may notify an electric power converter where the reference function and the feedback control method are to be not updated, of the fact that an update will not be made. The electric power converter where an update is to be not made may change the reference function in a case where an update command or a notification of the fact that an update will not be made has not been received after elapse of a predetermined time period from reception of the notification of the fact that an update of the reference function and the feedback control method would not be made.

In the above described embodiments, electric current values instead of electric power values may be used as electric characteristic values, such as measured values, target values, and control target values. In this case, for example, a reference function is defined as a V-I characteristic that is a relation between electric current (I) and voltage (V). Furthermore, for example, feedback control called droop I control is executed instead of droop P control, the feedback control being feedback control of determining target electric power I_{ref} (an example of a target value) based on a measured voltage value Vₒ from the sensor 11b and the reference function information and setting a quantity of operation so that the difference between I_{ref} and a measured electric current value Iₒ from the sensor 11b becomes equal to or less than an acceptable range. Furthermore, in droop V control, a target voltage V_{ref} is determined based on the measured electric current value Iₒ from the sensor 11b and the reference function information.

In the above described first embodiment, the electric power converters 11, 12, and 13 may each change the reference function as described below when changing the reference function to a reference function generated based on the standard function information. In a case supposed for an example described hereinafter: a breakdown occurs in communication between the EMS 40 and the electric power converters 11, 12, and 13 when the electric power converters 11, 12, and 13 are performing control using the same reference function through an update command from the EMS 40; and the SOC of the electric power element 21A is 80%, the SOC of the electric power element 21B is 60%, and the SOC of the electric power element 21C is 50% at that time.

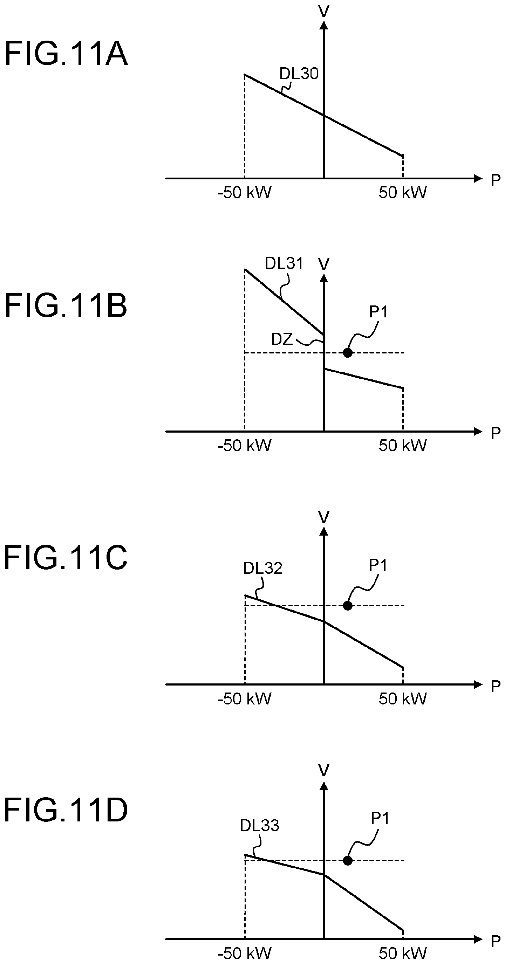

In a case where a breakdown has occurred in communication between the EMS 40 and the electric power converters 11, 12, and 13, the electric power converters 11, 12, and 13 change the reference function to be used in feedback control to a reference function generated based on the standard function. A line DL30 illustrated by a solid line in FIG. 11A is an example of the standard function represented by the standard reference function information that has been stored in the storage unit lied beforehand.

In a case where a breakdown has occurred in communication with the EMS 40, the control unit 11c generates a reference function having a slope that has been changed from that of the standard function represented by the line DL31 and changes the reference function to be used in control, to the generated reference function. Specifically, the control unit 11c changes the slope of the standard function based on the SOC of the electric power element that has been connected to the electric power conversion unit 11a, for example.

FIG. 11B is a diagram illustrating an example of a reference function generated from the standard function. In a case where the SOC of the electric power element 21A is 80%, the control unit 11c in the electric power converter 11 generates a reference function represented by a line DL31 based on the SOC and the standard function and performs control by changing the reference function to be used in feedback control to the generated reference function. The line DL31 corresponds to a reference function including an electric power conversion characteristic along a vertical axis. This portion of the line DL31 is called a dead zone, the portion being along the vertical axis. The line DL31 has a V-P characteristic of having voltage at an operating point larger than that on a line DL32. The line DL31 corresponds to a reference function having a slope with an absolute value larger than that of the line DL30 on the negative side of the V-P characteristic and a slope with an absolute value smaller than that of the line DL30 on the positive side of the V-P characteristic, and the absolute value of the slope on the negative side of the V-P characteristic is larger than the absolute value of the slope on the positive side of the V-P characteristic.

FIG. 11C is a diagram illustrating an example of a reference function generated from the standard function. In a case where the SOC of the electric power element 21B is 60%, the control unit 11c in the electric power converter 12 generates a reference function represented by the line DL32 based on the SOC and the standard function and performs control by changing the reference function to be used in feedback control to the generated reference function. The line DL32 corresponds to a reference function having a slope with an absolute value smaller than that of the line DL31 on the negative side of the V-P characteristic and a slope with an absolute value larger than that of the line DL31 on the positive side of the V-P characteristic, and the absolute value of the slope on the negative side of the V-P characteristic is smaller than the absolute value of the slope on the positive side of the V-P characteristic.

FIG. 11D is a diagram illustrating an example of a reference function generated from the standard function. In a case where the SOC of the electric power element 21C is 40%, the control unit 11c in the electric power converter 13 generates a reference function represented by a line DL33 based on the SOC and the standard function and performs control by changing the reference function to be used in feedback control to the generated reference function. The line DL33 corresponds to a reference function having a slope with an absolute value smaller than that of the line DL32 on the negative side of the V-P characteristic and a slope with an absolute value larger than that of the line DL32 on the positive side of the V-P characteristic, and the absolute value of the slope on the negative side of the V-P characteristic is smaller than the absolute value of the slope on the positive side of the V-P characteristic.

In a case where the electric power converter 11 executes droop P control, the reference function corresponds to the line DL31, and the operating point P1 is at a position illustrated in FIG. 11B; the electric power converter 11 performs control so that the operating point P1 is positioned in the dead zone. In this case, the target value of electric power in the dead zone represented by a reference numeral, "DZ", in FIG. 11B is 0, and discharging and charging of the electric power element 21A are thus not performed and the SOC of 80% is maintained. In a case where the electric power converter 12 executes droop P control, the reference function corresponds to the line DL32, and the operating point P1 is at a position illustrated in FIG. 11C; the electric power converter 12 performs control so that the operating point P1 is positioned on the line DL32 on the negative side of the V-P characteristic. In this case, the electric power element 21B is charged and the SOC is increased from 60%. In a case where the electric power converter 13 executes droop P control, the reference function corresponds to the line DL33, and the operating point P1 is at a position illustrated in FIG. 11D; the electric power converter 13 performs control so that the operating point P1 is positioned on the line DL33 on the negative side of the V-P characteristic. In this case, the electric power element 21C is charged with electric power larger than that for the electric power element 22 and the SOC is increased from 40%.

In a case where the operating point P1 is lower than the lower end of the dead zone and is on the positive side of the V-P characteristic when a breakdown has occurred in communication between the EMS 40 and the electric power converters 11, 12, and 13, droop P control performed at the electric power converters 11, 12, and 13 results in a relation, "electric power element 21A > electric power element 21B > electric power element 21C", for the electric power that is output. Therefore, output of an electric power element having a smaller SOC is able to be reduced.

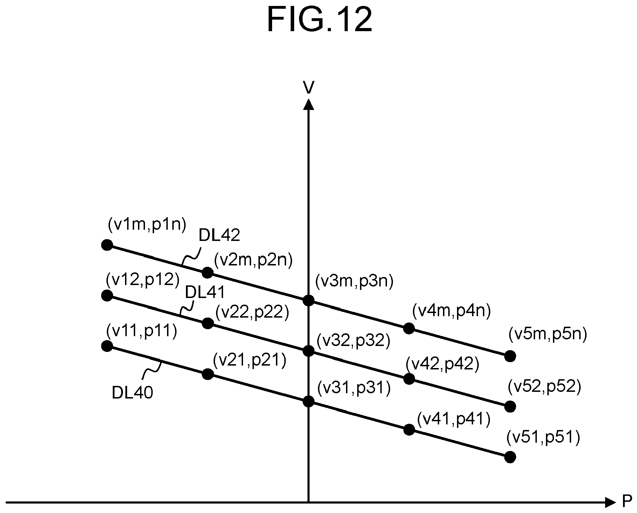

According to the present invention, in a case where a breakdown has occurred in communication between the electric power converters 11, 12, and 13 and the EMS 40, change from the reference function to be used in feedback control to a reference function generated based on the standard function is performed but a sudden change in the target value of feedback control between that before the change and that after the change may be prevented. FIG. 12 is a diagram for description of an example of change of the reference function.

A line DL4 illustrated in FIG. 12 is an example of the standard function represented by the standard reference function information that has been stored in the storage unit lied beforehand. Furthermore, a line DL41 illustrated in FIG. 12 is an example of a reference function updated from the line DL40 and a line DL42 illustrated in FIG. 12 is an example of a reference function updated from the line DL41. That is, the reference function is updated from the line DL40, which is the standard function, with the line DL41 and the line DL42, in this order.

For example, when a breakdown occurs in communication between the EMS 40 and the electric power converter 11, the electric power converter 11 updates the reference function that is the standard reference function, with the line DL41 first, and performs feedback control of setting the quantity of operation for a predetermined time period, for example. In a case where the operating point has become higher than the line DL41, for example, the electric power converter 11 updates the reference function on the line DL41 with the line DL42. The electric power converter 11 may update the reference function on the line DL41 with the line DL42 in response to elapse of a predetermine time period.

Furthermore, the reference function may be updated in plural steps for update of the line DL40 with the line DL42. For example, in a case supposed herein, coordinate information on five boundaries of the reference function information on the line DL40 includes (v11, p11), (v21, p21), (v31, p31), (v41, p41), and (v51, p51). In this case, the coordinates, (v11, p11), are updated with (v12, p12), and then with (v13, p13) in order and lastly updated with (v1m, pin). Furthermore, the other coordinates are similarly updated in plural steps and lastly updated with (v2m, p2n), (v3m, p3n), (v4m, p4n), and (v5m, p5n). The target value of feedback control will not change suddenly because of this configuration and thus a sudden change in voltage in the bus 30 or electric power in the bus 30 is able to be prevented.

### Industrial Applicability

The present invention is able to be used for electric power converters, electric power systems, and methods of controlling the electric power converters.

### Reference Signs List

11, 12, 13, 14, 15 ELECTRIC POWER CONVERTER
11a ELECTRIC POWER CONVERSION UNIT
11b SENSOR
11c, 41 CONTROL UNIT
11ca OPERATION QUANTITY SETTING UNIT
11cb DETERMINATION UNIT
11cc UPDATE UNIT
11cd, 42 STORAGE UNIT
11d, 43 COMMUNICATION UNIT
21A, 21B, 21C, 22, 24 ELECTRIC POWER ELEMENT
30 BUS
40 EMS
50 LOAD APPARATUS
100 ELECTRIC POWER SYSTEM
200 EXTERNAL SERVER
DL1, DL11, DL11A TO DL11C, DL21, DL21A TO DL21C LINE
NW NETWORK

## Claims

1. An electric power converter comprising:
a direct current electric power conversion unit connected to a direct current bus and configured to
convert input electric power and
output the converted electric power;
a measurement unit configured to obtain a measured value of an electric characteristic value of the input electric power or the output electric power;
a communication unit configured to
perform communication with an external device and
receive a reference function having a characteristic with a defined target value for an electric characteristic value according to an input value;
a storage unit configured to store a standard reference function having a predetermined characteristic; and
a control unit configured to control an electric power conversion characteristic of the electric power conversion unit based on a target value determined according to an input value, by voltage control corresponding to the characteristic, or by electric power control or electric current control, wherein
the control unit is configured to set the measured value as the input value,
in a case where the communication unit is able to communicate with the external device, the control unit is configured to control the electric power conversion characteristic of the electric power conversion unit based on the reference function from the input value, and
in a case where the communication unit is unable to communicate with the external device, the control unit is configured to control the electric power conversion characteristic of the electric power conversion unit based on the standard reference function from the input value.

2. The electric power converter according to claim 1, wherein the control unit is configured to
generate a reference function resulting from change in a characteristic of the standard reference function according to the measured value and
control the electric power conversion characteristic of the electric power conversion unit based on the generated reference function.

3. The electric power converter according to claim 2, wherein the electric power conversion unit is connected to an electric power element that is capable of supplying electric power and being charged and discharged.

4. The electric power converter according to claim 1, wherein the standard reference function has a characteristic that brings the bus into a stable state when the communication unit is in a state of being unable to communicate with the external device.

5. An electric power system, comprising:
the electric power converter according to any one of claims 1 to 4;
a direct current bus connected to the electric power converter; and
an electric power element connected to the electric power converter and capable of supplying electric power, consuming electric power, or being charged or discharged.

6. A method of controlling a direct current electric power converter connected to a direct current bus and configured to convert input electric power and output the converted electric power, the method comprising:
a measurement step of obtaining a measured value of an electric characteristic value of the input electric power or the output electric power;
a communication step of performing communication with an external device and receiving a reference function having a characteristic with a defined target value for an electric characteristic value according to an input value; and
a control step of controlling an electric power conversion characteristic of the electric power converter based on a target value determined according to an input value, by voltage control corresponding to the characteristic, or by electric power control or electric current control, wherein
the electric power converter includes a storage unit configured to store a standard reference function having a predetermined characteristic, and
at the control step, the measured value is set as the input value and in a case where communication is possible with the external device at the communication step, the electric power conversion characteristic of the electric power converter is controlled based on the reference function from the input value, and in a case where communication with the external device is impossible at the communication step, the electric power conversion characteristic of the electric power converter is controlled based on the standard reference function from the input value.
